# EUROPÄISCHE PATENTSCHRIFT

(11) **EP 3 988 455 B1**
(45) Veröffentlichungstag und Bekanntmachung des Hinweises auf die Patenterteilung: **03.04.2024**
(21) Anmeldenummer: 21200984.9
(22) Anmeldetag: 05.10.2021
(51) Int. Cl.: B64G 1/40

(54) **RAKETENANTRIEB, VERFAHREN SOWIE RAUMFAHRZEUG**
ROCKET ENGINE, METHOD AND SPACECRAFT
MOTEUR DE FUSÉE, PROCÉDÉ, AINSI QU'ENGIN SPATIAL

(30) Priorität: 23.10.2020 DE 102020128007
(43) Veröffentlichungstag der Anmeldung: 27.04.2022
(73) Patentinhaber: ArianeGroup GmbH, 82024 Taufkirchen (DE)
(72) Erfinder: Hessel, Christian, 28199 Bremen (DE)
(74) Vertreter: Marschall, Stefan

(56) Entgegenhaltungen:
- EP-A1- 1 283 347
- WO-A2-2015/012929
- US-A- 3 788 069
- US-A1- 2016 237 952
- US-B2- 9 446 862

## Beschreibung

Die Erfindung betrifft zunächst einen Raketenantrieb umfassend einen ersten kryogenen Tank und einen zweiten kryogenen Tank, wobei der erste kryogene Tank mit einem ersten Treibstoff und der zweite kryogene Tank mit einem zweiten Treibstoff zur Speisung mindestens eines wiederholt zündbaren Haupttriebwerks in einer Antriebsphase des Raketenantriebs befüllt ist.

Die US 2014/0203148 A1 offenbart eine kryogene Triebwerksanordnung. Die vorbekannte kryogene Antriebseinheit umfasst unter anderem ein wiederzündbares Haupttriebwerk und einen ersten Kryotank, der mit dem Haupttriebwerk verbunden ist, um es mit einem ersten Treibstoff zu versorgen. Weiterhin sind ein erster Gastank und mindestens ein Nebentriebwerk vorgesehen. Ein erster Versorgungskreislauf des ersten Gastanks ist mit dem ersten Kryotank verbunden und umfasst einen Wärmetauscher, um mit der von dem mindestens einen Nebentriebwerk freigesetzten Wärme einen Flüssigkeitsstrom des ersten Treibstoffs, der aus dem ersten Kryotank mittels einer Pumpe gefördert wird, zu verdampfen. Hierdurch kann der erste Gastank mit dem ersten Treibstoff im gasförmigen Zustand gespeist werden.

Das Laden der beiden Gastanks ist nur bei aktivem Haupttriebwerk oder aktiven Nebentriebwerken vorgesehen. Die Speisung der Nebentriebwerke aus den Gastanks ist nicht möglich. Darüber hinaus ist die Erzeugung von elektrischer Energie durch die Nutzbarmachung von beispielsweise abdampfendem Treibstoff nicht vorgesehen. Ein weiteres Beispiel findet sich im Dokument US9446862.

Aufgabe der Erfindung ist es unter anderem, einen Raketenantrieb mit einer erhöhten Energieeffizienz bei einer zugleich reduzierten Masse anzugeben, um eine höhere Nutzlast einer mit dem Raketenantrieb ausgestatteten Rakete oder eines Raumfahrzeugs zu ermöglichen. Eine weitere Aufgabe der Erfindung ist es, ein Verfahren zum Betrieb eines solchen Raketenantriebs sowie ein mit einem derartigen Raketenantrieb ausgestattetes Raumfahrzeug anzugeben.

Die eingangs genannte Aufgabe wird zunächst dadurch gelöst, dass zur Tankbedrückung durch eine zumindest geringfügige Beschleunigung in einer Ballistikphase ein erstes Hilfstriebwerk mittels eines ersten Gasdruckspeichers und mindestens ein weiteres Hilfstriebwerk mittels eines weiteren Gasdruckspeichers betreibbar ist und dem Raketenantrieb ein Energiewandlungsaggregat zugeordnet ist, das zumindest dazu ausgebildet ist, elektrische Energie zu erzeugen und den ersten und den zweiten Gasdruckspeicher bevorzugt in der Ballistikphase aufzuladen.

Die Antriebsphase des Raketenantriebs ist im Wesentlichen durch das aktive Haupttriebwerk ("Boost-Phase") gekennzeichnet, wohingegen in der Ballistikphase das Haupttriebwerk inaktiv und mindestens ein Hilfstriebwerk bzw. ein so genanntes "Absetztriebwerk" aktiv ist. Während der Ballistikphase kann sowohl aus mindestens einem Gasdruckspeicher Treibstoff entnommen werden, um die kryogenen Tanks zu bedrücken als auch mittels der durch die beiden Gasdruckspeicher versorgten Hilfstriebwerke zumindest geringfügiger Schub generiert werden, um eine Absetzbewegung der Treibstoffe in Richtung der Unterseiten der Tanks zu erreichen. Weiterhin erlaubt das erfindungsgemäße Energiewandlungsaggregat die Erzeugung von elektrischer Energie, so dass keine herkömmliche APU (so genannte Auxiliary Power Unit) bzw. kein von einer Brennkraftmaschine angetriebener elektrischer Generator etc. zur Stromerzeugung erforderlich ist, woraus eine weitere Gewichtseinsparung resultiert. Durch das Energiewandlungsaggregat ist ein optimales Ausnutzen des Treibstoffs möglich. Innerhalb des Energiewandlungsaggregats sind darüber hinaus keine mit Gasmotoren oder Brennkraftmaschinen angetriebenen (Turbo-)Pumpen oder Verdichter zum Einlagern der hochverdichteten bzw. der hochenergetischen gasförmigen Phasen der Treibstoffe in die Gasdruckspeicher erforderlich. Weiterhin sind Wärmetauscher in diesem Zusammenhang entbehrlich. Bei der Stromerzeugung sind Nichtantriebstreibstoffmassen, wie zum Beispiel verdampfter, gasförmiger Treibstoff, verwertbar, die ansonsten ungenutzt in den Weltraum entlassen würden. Weiterhin entfallen schwere Inertgasbehälter zur Bedrückung der kryogenen Tanks, woraus eine weitere Gewichtsreduzierung des Raketenantriebs resultiert. Im Vergleich zu hergebrachten Lösungen ist damit eine beträchtliche Erhöhung der Energieeffizienz des Raketenantriebs verbunden, die eine Erhöhung der Nutzlast ermöglicht. Anstelle des ersten und zweiten Gasdruckspeichers können auch absorbierende Metallhydridspeicher oder adsorbierende Speicher, wie zum Beispiel metallisch-organische Rahmen ("Metal Organic Frameworks"), vorgesehen sein.

Im Fall einer vorteilhaften Ausgestaltung ist der erste Gasdruckspeicher in der Antriebsphase mittels einer ersten Hauptzapfleitung des Haupttriebwerks und der zweite Gasdruckspeicher ist in der Antriebsphase mittels einer zweiten Hauptzapfleitung des Haupttriebwerks aufladbar. Hierdurch ist in der Antriebsphase einer mit dem Raketenantrieb ausgestatteten Rakete eine zügige Aufladung der Gasdruckspeicher gewährleistet. In den Gasdruckspeichern stehen die gasförmigen Phasen der Treibstoffe jeweils unter einem sehr hohen Druck von bis zu 200 bar.

Bevorzugt weist das Energiewandlungsaggregat zumindest eine Brennstoffzelle zur Erzeugung elektrischer Energie auf und der Brennstoffzelle ist eine Steuer- und/oder Regeleinheit zur umfassenden Kontrolle des Raketenantriebs nachgeordnet. Hierdurch lassen sich unter anderem Nichtantriebstreibstoffmassen bzw. durch das Haupttriebwerk und die Hilfstriebwerke nicht mehr verwertbare Massen gasförmigen Treibstoffs zur Stromerzeugung nutzen. Mit Hilfe der Steuer- und/oder Regeleinheit sind zudem vorzugsweise sämtliche Absperrventile, elektrische (Widerstands-)Heizelemente, (Turbo-)pumpen, Motoren, Aktoren sowie Sensoren zur Treibstoffkonditionierung innerhalb des Raketenantriebs regel- und/oder steuerbar. Der Begriff der Treibstoffkonditionierung definiert im Kontext der vorliegenden Beschreibung insbesondere die Temperatur und/oder den Druck der Treibstoffe.

Bei einer günstigen Ausgestaltung ist vorgesehen, dass die Brennstoffzelle einen ersten Aufnahmeraum für den ersten Treibstoff und einen zweiten Aufnahmeraum für den zweiten Treibstoff aufweist und der Brennstoffzelle ein Aufnahmebehälter für ein Reaktionsprodukt aus dem ersten und dem zweiten Treibstoff zugeordnet ist. Die Aufnahmeräume bzw. die internen Kavitäten der Brennstoffzelle dienen vorrangig nur als ein Verteiler, um die Aufnahme der unterschiedlichen Zuflüsse gasförmiger und/oder flüssiger Treibstoffe aus den Tanks, dem Triebwerk und den Gasdruckspeichern zu ermöglichen und zu vergleichmäßigen. Die Aufnahmeräume der Brennstoffzelle sind daher verhältnismäßig kleinvolumig und mit einer begrenzten Pufferwirkung ausgebildet. Lediglich in den, der Brennstoffzelle zuführenden Speiseleitungen befinden sich die Treibstoffe noch überwiegend in der flüssigen Phase und können gefördert werden. Innerhalb der Aufnahmeräume selbst müssen die Treibstoffe jedoch in der gasförmigen Phase vorliegen, was beispielsweise mit Hilfe von elektrischen (Widerstands-)Heizelementen und/oder durch die Nutzung der Verlustwärme der Brennstoffzelle realisiert werden kann.

Im Fall einer günstigen Weiterbildung ist dem Energiewandlungsaggregat mindestens eine Hochdruckelektrolysezelle zugeordnet, die bevorzugt mit der von der Brennstoffzelle bereitgestellten elektrischen Energie betrieben ist, um das zugeführte Reaktionsprodukt wieder in den ersten Treibstoff und in den zweiten Treibstoff in jeweils gasförmiger Phase aufzuspalten, wobei die gasförmigen Phasen der Treibstoffe unter einem hohen Druck stehen. Hierdurch ist eine Energierückwandlung nach dem so genannten "Gas-to-Power-to-Gas"-Prinzip im Weltraum (Orbit) möglich. Die Funktion der Hochdruckelektrolysezelle kann gegebenenfalls durch eine geeignete Brennstoffzelle mit übernommen werden, wobei in einer solchen Konstellation Stromerzeugung und Elektrolyse nicht gleichzeitig realisierbar sind. Darüber hinaus kann der Brennstoffzelle ein elektrischer Pufferspeicher, wie ein chemischer Akkumulator, ein hochkapazitiver Kondensator (so genannter "Super-Capacitor" bzw. "Ultra-Capacitor"), eine Kondensatorbatterie, eine Spule etc., zugeordnet sein, um die von der Brennstoffzelle generierte elektrische Energie zwischenzuspeichern und im Bedarfsfall schnell an die Hochdruckelektrolysezelle abgeben zu können.

Bei einer vorteilhaften Ausgestaltung ist vorgesehen, dass der erste gasförmige Treibstoff ausgehend von der Hochdruckelektrolysezelle mittels einer ersten Zuleitung in den ersten Gasdruckspeicher einlagerbar ist und der zweite gasförmige Treibstoff ausgehend von der Hochdruckelektrolysezelle mittels einer zweiten Zuleitung in den zweiten Gasdruckspeicher einlagerbar ist. Hierdurch sind die Gasdruckspeicher unabhängig vom Haupttriebwerk aufladbar.

Nach Maßgabe einer Weiterbildung sind mindestens zwei Manövriertriebwerke vorzugsweise mittels jeweils einer im Bereich einer Oberseite des ersten kryogenen Tanks angeordneten ersten Abdampfleitung und/oder aus den Gasdruckspeichern versorgbar. Hierdurch sind unter anderem geringfügige Kurskorrekturen eines mit dem erfindungsgemäßen Raketenantrieb ausgestatteten Raumfahrzeugs oder einer Raketen(ober)stufe mit ohnehin vorhandenen, gasförmigen Resttreibstoffmengen möglich.

Vorzugsweise ist im Bereich der ersten und einer zweiten Abdampfleitung jeweils mindestens ein Sicherheitsventil angeordnet. Infolgedessen ist eine zuverlässige Absicherung gegen etwaigen Überdruck gegeben. Durch die Sicherheitsventile ist ferner sichergestellt, dass im Fall einer Stilllegung des mit dem Raketenantrieb ausgestatteten Raumfahrzeugs kein geschlossenes Volumen mit Resten der kryogenen Treibstoffe im Weltraum verbleibt. Ein mit Treibstoffresten angefülltes geschlossenes Volumen könnte ansonsten bersten und zu einer Vergrößerung der Weltraumschrottmenge führen.

Bei einer vorteilhaften Ausgestaltung weist das Haupttriebwerk eine Versorgungseinheit, eine Brennkammer sowie eine Austrittsdüse auf, wobei die Versorgungseinheit mittels einer ersten Hauptleitung mit einer Unterseite des ersten kryogenen Tanks und mittels einer zweiten Hauptleitung mit einer Unterseite des zweiten kryogenen Tanks verbunden ist. Durch die bevorzugt mindestens zwei Förderorgane, wie beispielsweise zwei (Turbo-)Pumpen, beinhaltende Versorgungseinheit kann die Brennkammer des Haupttriebwerks über die Hauptleitung mit großen Volumenströmen beider Treibstoffe in flüssiger Phase gespeist werden.

Im Fall einer günstigen Ausgestaltung ist der erste Treibstoff bevorzugt Wasserstoff in flüssiger und/oder gasförmiger Phase und der zweite Treibstoff ist bevorzugt Sauerstoff in flüssiger und/oder gasförmiger Phase. Wassersoff als der erste Treibstoff und Sauerstoff als der zweite Treibstoff stellen die bevorzugte hochenergetische Kombination für den Betrieb des Raketenantriebs und für das Energiewandlungsaggregat dar. Ungeachtet dessen ist zum Beispiel Methan als erster Treibstoff und Sauerstoff als zweiter Treibstoff in Kombination vorstellbar. Der erste Treibstoff bzw. der eigentliche Brennstoff und der zweite Treibstoff bzw. der Oxydator liegen jeweils in kryogener Form vor (LH2/LOX oder LCH4/LOX und andere Stoffkombinationen) .

Die eingangs genannte Aufgabe wird darüber hinaus durch ein Verfahren nach Maßgabe des Patentanspruchs 11 gelöst, wonach in der Antriebsphase der erste und der zweite Gasdruckspeicher vorzugsweise mittels der jeweils zugeordneten Hauptzapfleitung geladen wird. Hierdurch ist grundsätzlich eine besonders schnelle und effiziente Beladung der Gasdruckspeicher möglich. Wenn jedoch im Anschluss an eine Ballistikphase eines mit dem Raketenantrieb ausgerüsteten Raumfahrzeugs ein großes Volumen der Treibstoffe verkocht ist (so genannter "Boil Off"-Treibstoff) und die abgedampften Treibstoffe wurden mittels des Energiewandlungsaggregats in elektrische Energie transformiert und anschließend mittels der Hochdruckelektrolysezelle wieder in den ersten und in den zweiten Treibstoff - jeweils in gasförmiger Phase - umgewandelt, ist eine erneute Beladung der Gasdruckspeicher nicht in jedem Fall möglich. Denn die Gasdruckspeicher sind in einer solchen Konstellation noch voll und weisen noch einen hohen Druck von bis zu 200 bar auf. Wenn in dieser Situation eine kurzzeitige Antriebsphase von beispielsweise 20 Sekunden durch das Zünden des Haupttriebwerks initiiert wird - was zum Beispiel beim Eintritt eines mit dem Raketenantrieb ausgestatteten Raumfahrzeugs in den Mondorbit erforderlich sein kann - werden die beiden Treibstoffe vom Haupttriebwerk in der gasförmigen Phase unter einem Druck von lediglich 100 bar über die Zapfleitung bereitgestellt. Der Druck in den Hauptzapfleitungen ist somit deutlich kleiner als der Druck der in den Gasdruckspeichern bevorrateten gasförmigen Treibstoffe. In dieser Fallkonstellation würden die gasförmigen Treibstoffe, wenn überhaupt, nur zur Bedrückung der Tanks während der Antriebsphase des Raumfahrzeugs bei aktiviertem Haupttriebwerk benutzt, aber nicht zum Laden der Gasdruckspeicher. Wenn in der Ballistikphase des Raketenantriebs jedoch extrem tiefe Temperaturen herrschten - was zum Beispiel beim Flug durch den Mondschatten der Fall ist - und die gasförmigen Treibstoffe in den Gasdruckspeichern unter einem deutlich kleineren Druck als 200 bar stehen, so können die Gasdruckspeicher während der Antriebsphase des Raketenantriebs, das heißt bei gezündetem Haupttriebwerk, problemlos geladen werden.

Nach Maßgabe einer weiteren vorteilhaften Weiterbildung des Verfahrens werden in der Ballistikphase der erste und der zweite Gasdruckspeicher vorzugsweise mittels des Energiewandlungsaggregats geladen. Infolgedessen können die Gasdruckspeicher unabhängig vom Haupttriebwerk geladen werden. Die Gasdruckspeicher können daneben auch mit Hilfe des Haupttriebwerks oder mit der Hochdruckelektrolysezelle geladen werden. In der Antriebsphase sollte jedoch bevorzugt mit dem Haupttriebwerk geladen werden, sofern der jeweils aktuelle Druck in den Gasdruckspeichern dies zulässt. Dies ist dann der Fall, wenn der Druck der gasförmigen Treibstoffe in den Gasspeichern kleiner als der Druck in den Hauptzapfleitungen des Haupttriebwerks ist. In der Ballistikphase des mit dem Raketenantrieb ausgestatteten Raumfahrzeugs können die Gasdruckspeicher jederzeit mit Hilfe des erfindungsgemäßen Energiewandlungsaggregats auf- oder nachgeladen werden.

Gemäß einer weiteren Ausgestaltung des Verfahrens erfolgt in der Antriebsphase die Schuberzeugung vorrangig mittels des Haupttriebwerks und in der Ballistikphase mit Hilfe des von den mindestens zwei Gasdruckspeichern versorgten mindestens einen Hilfstriebwerks. Hierdurch kann auch in der Ballistikphase eines mit dem Raketenantrieb ausgerüsteten Raumfahrzeugs zumindest eine geringfügige Beschleunigung aufrechterhalten werden, so dass sich die Treibstoffe bevorzugt im Bereich der Unterseiten des Tanks absetzen und ein etwaiges Wiederzünden des Haupttriebwerks durch Ansaugen der Treibstoffe mit Hilfe der (Turbo-)Pumpen der Hauptleitungen problemlos möglich ist.

Darüber hinaus wird die eingangs genannte Aufgabe durch ein Raumfahrzeug nach Maßgabe von Patentanspruch 14 gelöst, wonach das Raumfahrzeug mit mindestens einem Raketenantrieb nach einem der Patentansprüche 1 bis 10 ausgestattet ist. Infolgedessen ergibt sich aufgrund der signifikanten Effizienzsteigerung des Raketenantriebs unter anderem eine erhöhte Nutzlast des Raumfahrzeugs. Bei dem Raumfahrzeug kann es sich beispielsweise um eine Oberstufe bzw. eine letzte Stufe einer mehrstufigen Rakete, einen Raumtransporter, einen Satelliten, ein bemanntes Raumschiff oder eine unbemannte Raumsonde für den Erdorbit oder den interplanetaren Orbit handeln.

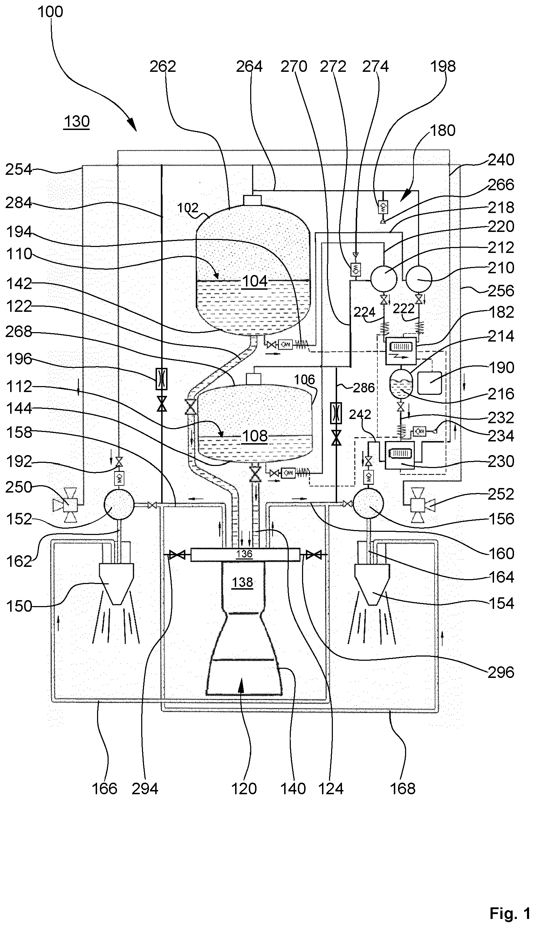

Im Folgenden wird ein bevorzugtes Ausführungsbeispiel der Erfindung anhand einer schematischen Figur näher erläutert. Es zeigt
- Figur 1: ein stark vereinfachtes Schaltbild eines erfindungsgemäßen Raketenantriebs.

Figur 1 illustriert ein stark vereinfachtes Schaltbild eines erfindungsgemäßen Raketenantriebs. Ein Raketenantrieb 100 bzw. eine komplette Raketenantriebseinheit umfasst unter anderem einen ersten kryogenen Tank 102 zur Bevorratung eines ersten Treibstoffs 104 und einen zweiten kryogenen Tank 106 zur Bevorratung eines zweiten Treibstoffs 108, wobei ein mehrfach zündbares Haupttriebwerk 120 über eine erste und eine zweite Hauptleitung 122, 124 mit den Treibstoffen 104, 108 in flüssiger Phase versorgbar ist. Die Speisung des Haupttriebwerks 120 mit den Treibstoffen 104, 108 über die Hauptleitungen 122, 124 erfolgt beispielsweise in einer Antriebsphase bzw. einer so genannten Boost-Phase oder einer Start-Phase eines mit dem Raketenantrieb 100 ausgestatteten, nicht dargestellten Raumfahrzeugs 130. Die Antriebsphase des Raumfahrzeugs 130 kann erforderlichenfalls auch im Weltraum durch das Zünden des Haupttriebwerks 120 initiiert werden. Bei dem Raumfahrzeug 130 kann es sich beispielsweise um eine Oberstufe bzw. eine letzte Stufe einer mehrstufigen Rakete, einen Raumtransporter, einen Satelliten, ein bemanntes Raumschiff, eine Landefähre oder eine unbemannte Raumsonde für den Erdorbit oder den interplanetaren Orbit usw. handeln.

Das Haupttriebwerk 120 verfügt über eine zentrale Versorgungseinheit 136 und eine Brennkammer 138 mit einer Austrittsdüse 140, wobei die Versorgungseinheit 136 mittels der ersten Hauptleitung 122 im Bereich einer Unterseite 142 des ersten kryogenen Tanks 102 und mittels der zweiten Hauptleitung 124 im Bereich einer Unterseite 144 des zweiten kryogenen Tanks 106 verbunden ist. In der Versorgungseinheit 136 können sich beispielsweise nicht eingezeichnete (Turbo-)Pumpen, Wärmetauscher, elektrische (Widerstands-)Heizelemente zur Temperierung bzw. Konditionierung der mittels der Hauptleitungen 122, 124 zugeführten Treibstoffe 104, 108 etc. befinden. Jede der Hauptleitungen 122, 124 verfügt jeweils über ein Absperrventil, das der besseren zeichnerischen Übersicht wegen nicht bezeichnet ist. Eine bevorzugte Fließrichtung der flüssigen und/oder gasförmigen kryogenen Treibstoffe 104, 106 ist in der Fig. 1 mit gleichfalls der besseren zeichnerischen Übersicht halber nicht bezeichneten schwarzen Pfeilen gekennzeichnet. Der besseren zeichnerischen Übersicht halber lediglich teilweise dargestellte elektrische Steuerleitungen sind mit gestrichelten schwarzen Linien symbolisiert. Oberhalb eines Flüssigkeitsspiegels 110 im ersten Tank 102 befindet sich der erste Treibstoff 104 im Wesentlichen vollständig in der gasförmigen Phase. Entsprechend befindet sich der zweite Treibstoff 108 oberhalb eines Flüssigkeitsspiegels 112 des zweiten Tanks 106 ebenfalls im Wesentlichen vollständig im gasförmigen Zustand.

Unter anderem zur Bedrückung der beiden Tanks 102, 106 in einer so genannten Ballistikphase des Raumfahrzeugs 130 im Orbit ist ein erstes Hilfstriebwerk 150 mittels eines ersten Gasdruckspeichers 152 und ein zweites Hilfstriebwerk 154 mittels eines zweiten Gasdruckspeichers 156 betreibbar. Mindestens eines der Hilfstriebwerke 150, 154 ist in der Ballistikphase im schwerelosen Orbit aktiv, um durch das Aufrechterhalten einer zumindest geringfügigen Beschleunigung die in flüssiger und/oder gasförmiger Form befindlichen Treibstoffe 104, 108 definiert im Bereich der Unterseiten 142, 144 der Tanks 102, 106 zu halten.

Der erste Gasdruckspeicher 152 ist unter anderem mittels einer ersten Hauptzapfleitung 158 und der zweite Gasdruckspeicher 156 ist mittels einer zweiten Hauptzapfleitung 160 ausgehend von der Versorgungseinheit 136 des Haupttriebwerks 120 aufladbar, wobei jede der Hauptzapfleitungen 158, 160 wiederum ein nicht bezeichnetes Absperrventil aufweist. Die Gasdruckspeicher 152, 156 enthalten die Treibstoffe 104, 108 jeweils in bevorzugt gasförmiger Form sowie unter einem hohen Druck von bis zu 200 bar. Der erste Gasdruckspeicher 152 ist über eine erste Versorgungsleitung 162 mit dem ersten Hilfstriebwerk 150 verbunden, während der zweite Gasdruckspeicher 156 mittels einer zweiten Versorgungsleitung 164 mit dem zweiten Hilfstriebwerk 154 verbunden ist. Um die beiden Hilfstriebwerke 150, 154 jeweils mit beiden Treibstoffen 104, 106 speisen zu können, ist eine erste und eine zweite Überkreuzleitung 166, 168 vorgesehen, wobei die erste Überkreuzleitung 166 mit der zweiten Hauptzapfleitung 160 und die zweite Überkreuzleitung 168 mit der ersten Hauptzapfleitung 158 der Versorgungseinheit 136 des Haupttriebwerks 120 verbunden ist.

Erfindungsgemäß ist dem Raketenantrieb 100 ein Energiewandlungsaggregat 180 zugeordnet, das dazu ausgebildet ist, zumindest den ersten und zweiten Gasdruckspeicher 152, 156 bevorzugt in der Ballistikphase des Raumfahrzeugs 130 aufzuladen.

Das Energiewandlungsaggregat 180 umfasst unter anderem mindestens eine Brennstoffzelle 182 zur Umwandlung chemischer Energie in elektrische Energie. Der mindestens einen Brennstoffzelle 182 ist mindestens eine hochleistungsfähige digitale Steuer- und/oder Regeleinheit 190 zur Kontrolle des elektrischen Leistungsflusses innerhalb des Raketenantriebs 100 zugeordnet. Darüber hinaus ist die Steuer- und/oder Regeleinheit 190 bevorzugt zur Kontrolle aller elektrisch betätigbaren Absperrventile, (Turbo-)Pumpen, Aktoren, Motoren und elektrischen Heizelemente innerhalb des Raketenantriebs 100 ausgebildet. Von den elektrisch betätigbaren Absperrventilen ist lediglich ein Absperrventil 192 der besseren zeichnerischen Übersicht halber repräsentativ für alle übrigen bezeichnet. Dasselbe gilt für die Vielzahl von elektrischen (Widerstands-)Heizelementen, von denen nur ein elektrisches (Widerstands-)Heizelemente 194 bezeichnet ist. Ferner sind nur ein Drosselventil 196 sowie ein federbelastetes Rückschlagventil 198 stellvertretend für alle übrigen Drosselventile und federbelasteten Rückschlagventile bezeichnet.

Die Brennstoffzelle 182 verfügt über einen ersten Aufnahmeraum 210 bzw. eine erste brennstoffzelleninterne Kavität für den ersten Treibstoff 104 und einen zweiten Aufnahmeraum 212 bzw. eine zweite brennstoffzelleninterne Kavität für den zweiten Treibstoff 108. Der erste Aufnahmeraum 210 ist mittels einer ersten Speiseleitung 218 im Bereich der Unterseite 142 des ersten Tanks 102 mit diesem verbunden. Entsprechend ist der zweite Aufnahmeraum 212 mittels einer zweiten Speiseleitung 220 im Bereich der Unterseite 144 des zweiten Tanks 106 mit diesem verbunden. In jeder der Speiseleitungen 218, 220 befindet sich jeweils ein Absperrorgan, ein elektrisches (Widerstands-)Heizelement sowie ein federbelastetes Rückschlagventil - die der besseren zeichnerischen Übersicht halber nicht bezeichnet sind -, wobei die Absperrorgane und die eklektischen (Widerstands-)Heizelemente vorzugsweise jeweils individuell mit Hilfe der Steuer- und/oder Regeleinheit 190 kontrollierbar sind. Der Brennstoffzelle 182 ist ferner ein Aufnahmebehälter 214 für ein Reaktionsprodukt 216 aus dem ersten und zweiten Treibstoff 104, 108 nachgeschaltet.

Die Steuer- und/oder Regeleinheit 190 ist dazu ausgebildet, sämtliche Betriebsbedingungen des Raketenantriebs 100, insbesondere die relevanten Temperatur- und Druckbereiche, einzuhalten. Hierbei erfolgt unter anderem die komplexe interne Steuerung des Energiewandlungsaggregats 180 bzw. der (Widerstands-)Heizelemente zur Temperierung der Treibstoffe 104, 108. Sind die Treibstoffe 104, 108 beispielsweise zu kalt für den Betrieb der Brennstoffzelle, kann der betreffende Treibstoff 104, 108 mittels eines elektrischen (Widerstands-)Heizelements entsprechend temperiert werden. Aktive Kühlelemente, wie zum Beispiel Peltier-Elemente, sind innerhalb des Raketenantriebs 100 im Allgemeinen nicht vorgesehen. Die Treibstoffe 104, 108 in den Tanks 102, 106 können zum Beispiel durch das Öffnen von zugeordneten Absperrventilen und einer damit einhergehenden Druckabsenkung innerhalb der Tanks 102, 106 temperiert werden, da sich die Treibstoffe 104, 108 bei diesem Vorgang durch Verdampfen abkühlen. Die jeweils oberhalb der Flüssigkeitsspiegel 110, 112 in den Tanks 102, 106 in gasförmiger Phase vorliegenden Treibstoffe 104, 108 können dann mittels des Energiewandlungsaggregats 180 verstromt werden und gelangen nicht mehr ungenutzt in den Weltraum. Da bei diesem Prozess thermische Energie bzw. Wärme freigesetzt wird, ist eine Kühlung der Brennstoffzelle 182 mittels der kalten, gasförmigen Treibstoffe 104, 108 möglich. In diesem Fall können aktive (Widerstands-)Heizelemente entfallen, da die entsprechende Vorwärmung der Treibstoffe 104, 108 über die Abwärme der Brennstoffzelle 182 im Zuge von deren Kühlung sichergestellt ist. Zwischen dem ersten Aufnahmeraum 210 und der Brennstoffzelle 182 ist ferner eine erste Zuleitung 222 und zwischen dem zweiten Aufnahmeraum 212 und der Brennstoffzelle 182 ist eine zweite Zuleitung 224 vorgesehen, die jeweils ein von der Steuer- und/oder Regeleinheit 190 kontrollierbares Absperrorgan sowie ein elektrisches (Widerstands-)Heizelement aufweisen. Diese (Widerstands-)Heizelemente dienen zum brennstoffzellengerechten Vorwärmen der gasförmigen Treibstoffe 104, 108 innerhalb der Aufnahmeräume 210, 212 der Brennstoffzelle 182.

Der Brennstoffzelle 182 des Energiewandlungsaggregats 180 ist zudem mindestens eine Hochdruckelektrolysezelle 230 nachgeordnet, die bevorzugt mit der von der Brennstoffzelle 182 bereitgestellten elektrischen Energie betreibbar ist und die mit dem flüssigen Reaktionsprodukt 216 aus dem Aufnahmebehälter 214 versorgbar ist. Hierdurch kann das Reaktionsprodukt 216 wiederum in den ersten und zweiten Treibstoff 104, 108 in jeweils gasförmiger Phase aufgespalten werden. Bei dem Reaktionsprodukt 216 handelt es sich für den Fall, dass der erste Treibstoff 104 Wasserstoff und der zweite Treibstoff 108 Sauerstoff ist, um chemisch reines Wasser. Die gasförmigen Treibstoffe 104, 108 stehen hierbei unter einem hohen Druck von bis zu 200 bar. Der Aufnahmebehälter 214 ist mittels einer Verbindungsleitung 232 mit der Hochdruckelektrolysezelle 230 zur Zuführung des Reaktionsprodukts 216 verbunden. Die Verbindungsleitung 232 verfügt wiederum über ein nicht bezeichnetes Absperrorgan sowie ein elektrisches (Heiz-)Widerstandselement, die vorzugsweise von der Steuer- und/oder Regeleinheit 190 kontrollierbar sind. Darüber hinaus ist an die Verbindungsleitung 232 nach dem elektrischen (Widerstands-) Heizelement ein nicht bezeichnetes, federbelastetes Rückschlagventil mit einem nachfolgenden Sicherheitsventil 234 bzw. einem Überdruckventil angeschlossen.

Ausgehend von der Hochdruckelektrolysezelle 230 ist der gasförmige erste Treibstoff 104 mittels einer ersten Zuleitung 240 in den ersten Gasdruckspeicher 152 einlagerbar und der gasförmige zweite Treibstoff 108 ist mittels einer zweiten Zuleitung 242 in den zweiten Gasdruckspeicher 156 einlagerbar. Die Zuleitungen 240, 242 verfügen über jeweils ein von der Steuer- und/oder Regeleinheit 190 kontrollierbares Absperrorgan sowie ein federbelastetes Rückschlagventil, so dass unabhängig vom jeweiligen Öffnungszustand der Absperrorgane kein Treibstoff 104, 108 aus den Gasdruckspeichern 152, 156 in die Hockdruckelektrolysezelle 230 zurückströmen kann.

Die mit Hilfe der Brennstoffzelle 182 generierte elektrische Energie bzw. der Strom kann erforderlichenfalls, zum Beispiel im Fall eines Stromüberschusses, in einem nicht dargestellten elektrischen Pufferspeicher als eine weitere Komponente des Energiewandlungsaggregats 180 temporär zwischengespeichert werden. Als geeignete elektrische Pufferspeicher kommen beispielsweise ein chemischer Akkumulator, ein hochkapazitiver Kondensator (so genannter "Super-Capacitor" bzw. "Ultra-Capacitor"), eine Kondensatorbatterie, eine supraleitende Spule oder dergleichen in Betracht. Infolgedessen ist ein zeitlich versetzter Betrieb der Hochdruckelektrolysezelle 230 mittels der von der Brennstoffzelle 182 generierten elektrischen Energie möglich. Prinzipiell kann die mittels der Brennstoffzelle 182 gewonnene elektrische Energie zum Betrieb sämtlicher innerhalb des Raketenantriebs 100 vorhandener elektrischer Verbraucher eingesetzt werden.

Hierzu zählen beispielsweise (Turbo-)Pumpen, die Hochdruckelektrolysezelle 230, elektrisch betätigbare Absperrventile, (Widerstands-)Heizelemente, die Steuer- und/oder Regeleinheit 190, Motoren, Aktoren, Sensoren oder dergleichen.

Weiterhin verfügt der Raketenantrieb 100 hier lediglich exemplarisch über ein erstes und ein zweites (Kaltgas-)Manövriertriebwerk 250, 252, die vorzugsweise zur Lagekontrolle des Raumfahrzeugs 130 im Orbit bestimmt sind. Das erste Manövriertriebwerk 250 ist mittels einer ersten, im Bereich einer Oberseite 262 des Tanks 102 angeschlossenen Leitung 254 mit dem ersten, vorzugsweise in gasförmiger Form vorliegenden Treibstoff 104 versorgbar. Entsprechend ist das zweite Manövriertriebwerk 252 mittels einer zweiten Leitung 256, die gleichfalls bevorzugt im Bereich der Oberseite 262 des ersten Tanks 102 angeschlossen ist, mit dem gasförmigen ersten Treibstoff 102 beaufschlagbar. Zur Kontrolle der Manövriertriebwerkte 250, 252 sind in den Leitungen 254, 256 nicht eingezeichnete, elektrisch von der Steuer- und/oder Regeleinheit 190 kontrollierbare Absperrventile vorgesehen.

Im Bereich der Oberseite 262 des ersten kryogenen Tanks 102 ist darüber hinaus eine erste Abdampfleitung 264 zur Speisung des ersten Aufnahmeraums 210 der Brennstoffzelle 182 mit dem ersten Treibstoff 104 vorgesehen. An die erste Abdampfleitung 264 ist ein Rückschlagventil 198 angeschlossen, dem wiederum ein Sicherheitsventil 266 bzw. ein Überdruckventil nachgeschaltet ist. Entsprechend ist auch im Bereich einer Oberseite 268 des zweiten kryogenen Tanks 106 eine zweite Abdampfleitung 270 zur Versorgung des zweiten Aufnahmeraums 212 der Brennstoffzelle 182 mit dem zweiten Treibstoff 108 in gasförmiger Phase vorgesehen. An die zweite Abdampfleitung 270 ist wiederum ein Rückschlagventil 272 angeschlossen, dem ein Sicherheitsventil 274 nachgeschaltet ist.

Die Manövriertriebwerke 250, 252 sind hier lediglich beispielhaft mittels der Abdampfleitung 264 des ersten Tanks 102, die ihrerseits mit der ersten und zweiten Leitung 254, 256 der Manövriertriebwerke 250, 252 in Verbindung steht und/oder mittels weiterer, nicht dargestellter Leitungen aus den beiden Gasdruckspeichern 152, 156 versorgbar. Gasförmiger Treibstoff 104 aus dem ersten Tank 102 weist eine extrem geringe Temperatur und auch einen nur sehr geringen Druck von etwa 1.3 - 4.0 bar auf. Werden die Manövriertriebwerke 250, 252 hiermit beaufschlagt, kann nur ein geringer spezifischer Impuls von 80 s bis 120 s generiert werden. Durch die Speisung der Manövriertriebwerke 250, 252 aus einem der beiden Gasdruckspeicher 152, 156 ist hingegen ein mindestens doppelt so hoher spezifischer Impuls erzeugbar, so dass gegebenenfalls umfangreichere Steuermanöver des Raumfahrzeugs, wie zum Beispiel Bahnkorrekturen durchführbar sind.

Die beiden auch mittels der Abdampfleitungen 264, 270 versorgbaren Aufnahmebehälter 210, 212 der Brennstoffzelle 182 können sowohl in der Antriebsphase als auch in der Ballistikphase des Raketenantriebs 100 Treibstoff 104, 108 in gasförmiger Phase aufnehmen. In der Ballistikphase erfolgt die Aufnahme, wenn genügend abdampfender Treibstoff 104, 108 über die Abdampfleitungen 264, 270 oder hinreichend flüssiger Treibstoff 104, 108 über die Speiseleitungen 218, 220 bei zumindest geringer Beschleunigung zur Verfügung steht.

Darüber hinaus sind in dem Raketenantrieb 100 zwei Abzweigleitungen 284, 286 (so genannte "Tap-Off-Leitungen") vorgesehen, wobei die erste Abzweigleitung 284 zwischen der ersten Leitung 254 bzw. der ersten Abdampfleitung 264 und der ersten Hauptzapfleitung 158 und entsprechend die zweite Abzweigleitung 286 zwischen der zweiten Abdampfleitung 270 und der ersten Hauptzapfleitung 160 geschaltet ist. Die Abzweigleitungen 284, 286 dienen unter anderem zur Druckstabilisierung in den Tanks 102, 106 bei aktivem Haupttriebwerk 120 in der Antriebsphase des Raumfahrzeugs 130 unter Schwerelosigkeit oder beim Start. Darüber hinaus dienen die Abzweigleitungen 284, 286 zur Kontrolle der beiden Gasdruckspeicher 152, 156. In den Abzweigleitungen 284, 286 ist jeweils ein passives Drosselventil sowie ein elektrisch mittels der Steuer- und/oder Regeleinheit 190 betätigbares Absperrventil vorgesehen, die der besseren zeichnerischen Übersicht halber ebenfalls nicht bezeichnet sind.

Zwischen der Überkreuzleitung 166 und der Versorgungseinheit 136 des Haupttriebwerks 120 ist ferner eine erste Kühlleitung 294 (so genannte "Chill-Down-Leitung") und zwischen der Überkreuzleitung 168 und der Versorgungseinheit 136 des Haupttriebwerks 120 befindet sich eine zweite Kühlleitung 296 (so genannte "Chill-Down-Leitung"), die jeweils ein nicht bezeichnetes, elektrisch mittels der Steuer- und/oder Regeleinheit 190 betätigbares Absperrventil aufweisen. Die Kühlleitungen 294, 296 sind unter anderem zur Kühlung des Haupttriebwerks 120 unmittelbar vor dessen Zündung bestimmt, wobei die (Turbo-)Pumpen innerhalb der Versorgungseinheit 136 mitgekühlt werden. Infolgedessen werden eine Dampfblasenbildung und damit eingehend unerwünschte Kavitationseffekte beim Anlassen des Haupttriebwerks 120 vermieden.

Bei dem ersten Treibstoff 104 handelt es sich zum Beispiel um gasförmigen und/oder flüssigen Wasserstoff, während als zweiter Treibstoff 108 bzw. als so genannter Oxidator in der Regel gasförmiger und/oder flüssiger Sauerstoff Verwendung findet. Anstelle von Wasserstoff kann unter anderem auch Methan in flüssiger und/oder gasförmiger Phase zum Einsatz kommen.

Darüber hinaus hat die Erfindung ein Verfahren zum Betrieb des Raketenantrieb s100 zum Gegenstand.

Verfahrensgemäß wird vorzugsweise in der Antriebsphase des Raketenantriebs 100 der erste und der zweite Gasdruckspeicher 152, 156 mit Hilfe der jeweils zugeordneten Hauptzapfleitungen 158, 160 geladen. Weiterhin können in der Antriebsphase und/oder der Ballistikphase des mit dem Raketenantrieb 100 ausgestatteten Raumfahrzeugs 130 der erste und der zweite Gasdruckspeicher 152, 156 bevorzugt mittels der Versorgungseinheit 136 des Haupttriebwerks 120 und/oder mittels der von der Brennstoffzelle 182 und/oder von dem elektrischen Pufferspeicher mit elektrischer Energie versorgten Hochdruckelektrolysezelle 230 aufgeladen werden.

In der Antriebsphase des Raketenantriebs 100 erfolgt verfahrensgemäß die Schuberzeugung vorrangig mittels des Haupttriebwerks 120 und in der Ballistikphase mit Hilfe der von den mindestens zwei Gasdruckspeichern 152, 156 versorgten mindestens zwei Hilfstriebwerke.

In der Ballistikphase wird mit den Hilfstriebwerken 150, 154 des Raketenantriebs 100 operiert, welche mit den, in den Gasdruckspeichern 152, 156 jeweils getrennt eingelagerten Treibstoffen 104, 108 gespeist werden. Für eine etwaige Wiederzündung des Haupttriebwerks 120 ist es erforderlich, dass sich die Treibstoffe 104, 108 in flüssiger Phase im Bereich der Unterseiten 142, 144 der Tanks 102, 106 befinden. Eine Bedrückung der Tanks 102, 106 spielt nur bei der thermischen Konditionierung der Treibstoffe 104, 108 eine Rolle, wenn diese beispielsweise zu warm für das Triebwerk 120 sind und eine Abkühlung der Treibstoffe 104, 108 durch kontrolliertes Abdampfen unabdingbar ist. Die im Zuge dieses Prozesses entstehenden gasförmigen Treibstoffe 104, 108 können dann zumindest teilweise mit Hilfe des Energiewandlungsaggregates 180 durch das Einlagern in die jeweiligen Gasdruckspeicher 152, 156 wiederbenutzt werden.

Daneben betrifft die Erfindung das mit dem Raketenantrieb 100 ausgerüstete Raumfahrzeug 130.

Im Ergebnis weist der erfindungsgemäße Raketenantrieb 100 eine beträchtlich gesteigerte Energieeffizienz auf, da betriebsbedingt freiwerdende, in der Regel gasförmige Treibstoffe 104, 108 nicht mehr ungenutzt in den Weltraum abgelassen werden müssen, sondern der gezielten energetischen Wiederverwendung durch das Energiewandlungsaggregat 180 zugeführt werden.

Die Erfindung betrifft einen Raketenantrieb 100 umfassend einen ersten kryogenen Tank 102 und einen zweiten kryogenen Tank 106, wobei der erste kryogene Tank 102 mit einem ersten Treibstoff 104 und der zweite kryogene Tank 106 mit einem zweiten Treibstoff 108 zur Speisung mindestens eines wiederholt zündbaren Haupttriebwerks 120 in einer Antriebsphase des Raketenantriebs 100 befüllt ist. Erfindungsgemäß ist zur Tankbedrückung durch eine zumindest geringfügige Beschleunigung in einer Ballistikphase ein erstes Hilfstriebwerk 150 mittels eines ersten Gasdruckspeichers 152 und mindestens ein weiteres Hilfstriebwerk 154 mittels eines weiteren Gasdruckspeichers 156 betreibbar und dem Raketenantrieb 100 ist ein Energiewandlungsaggregat 180 zugeordnet, das zumindest dazu ausgebildet ist, den ersten und den zweiten Gasdruckspeicher 152, 156 bevorzugt in der Ballistikphase aufzuladen. Hierdurch ist der Raketenantrieb 100 besonders energieeffizient, was unter anderem eine Nutzlasterhöhung eines mit dem Raketenantrieb 100 ausgerüsteten Raumfahrzeugs 130 gestattet.

### Bezugszeichenliste

- 100: Raketenantrieb
- 102: erster kryogener Tank
- 104: erster Treibstoff (Brennstoff)
- 106: zweiter kryogener Tank
- 108: zweiter Treibstoff (Oxidator)
- 110: Flüssigkeitsspiegel (erster Tank)
- 112: Flüssigkeitsspiegel (zweiter Tank)
- 120: Haupttriebwerk
- 122: erste Hauptleitung
- 124: zweite Hauptleitung
- 130: Raumfahrzeug
- 136: Versorgungseinheit (Haupttriebwerk)
- 138: Brennkammer
- 140: Austrittsdüse
- 142: Unterseite (erster Tank)
- 144: Unterseite (zweiter Tank)
- 150: erstes Hilfstriebwerk
- 152: erster Gasdruckspeicher
- 154: zweites Hilfstriebwerk
- 156: zweiter Gasdruckspeicher
- 158: erste Hauptzapfleitung
- 160: zweite Hauptzapfleitung
- 162: erste Versorgungsleitung (Nebentriebwerk)
- 164: zweite Versorgungsleitung (Nebentriebwerk)
- 166: Überkreuzleitung
- 168: Überkreuzleitung
- 180: Energiewandlungsaggregat
- 182: Brennstoffzelle
- 190: Steuer- und/oder Regeleinheit
- 192: Absperrventil
- 194: elektrisches Heizelement
- 196: Drossel
- 198: federbelastetes Rückschlagventil
- 210: erster Aufnahmeraum (Brennstoffzelle)
- 212: zweiter Aufnahmeraum (Brennstoffzelle)
- 214: Aufnahmebehälter
- 216: Reaktionsprodukt
- 218: erste Speiseleitung
- 220: zweite Speiseleitung
- 222: erste Zuleitung
- 224: zweite Zuleitung
- 230: Hochdruckelektrolysezelle
- 232: Verbindungsleitung
- 234: Sicherheitsventil
- 240: erste Zuleitung
- 242: zweite Zuleitung
- 250: erstes Manövriertriebwerk
- 252: zweites Manövriertriebwerk
- 254: erste Leitung
- 256: zweite Leitung
- 262: Oberseite (erster Tank)
- 264: erste Abdampfleitung
- 266: Sicherheitsventil
- 268: Oberseite (zweiter Tank)
- 270: zweite Abdampfleitung
- 272: Rückschlagventil
- 274: Sicherheitsventil
- 284: erste Abzweigleitung
- 286: zweite Abzweigleitung
- 294: erste Kühlleitung
- 296: zweite Kühlleitung

## Patentansprüche

1. Raketenantrieb (100) umfassend einen ersten kryogenen Tank (102) und einen zweiten kryogenen Tank (106), wobei der erste kryogene Tank (102) mit einem ersten Treibstoff (104) und der zweite kryogene Tank (106) mit einem zweiten Treibstoff (108) zur Speisung mindestens eines wiederholt zündbaren Haupttriebwerks (120) in einer Antriebsphase des Raketenantriebs (100) befüllt ist, wobei Tankbedrückung durch eine zumindest geringfügige Beschleunigung in einer Ballistikphase ein erstes Hilfstriebwerk (150) mittels eines ersten Gasdruckspeichers (152) und mindestens ein weiteres Hilfstriebwerk (154) mittels eines weiteren Gasdruckspeichers (156) betreibbar ist und dem Raketenantrieb (100) ein Energiewandlungsaggregat (180) zugeordnet ist, **dadurch gekennzeichnet, dass** das Energiewandlungsaggregat (180) zumindest dazu ausgebildet ist, elektrische Energie zu erzeugen und den ersten und den zweiten Gasdruckspeicher (152, 156) bevorzugt in der Ballistikphase aufzuladen.

2. Raketenantrieb (100) nach Patentanspruch 1, **dadurch gekennzeichnet, dass** der erste Gasdruckspeicher (152) in der Antriebsphase mittels einer ersten Hauptzapfleitung (158) des Haupttriebwerks (120) und der zweite Gasdruckspeicher (156) in der Antriebsphase mittels einer zweiten Hauptzapfleitung (160) des Haupttriebwerks (160) aufladbar ist.

3. Raketenantrieb (100) nach Patentanspruch 1 oder 2, **dadurch gekennzeichnet, dass** das Energiewandlungsaggregat (180) zumindest eine Brennstoffzelle (182) zur Erzeugung elektrischer Energie aufweist und der Brennstoffzelle (182) eine Steuer- und/oder Regeleinheit (190) zur umfassenden Kontrolle des Raketenantriebs (100) nachgeordnet ist.

4. Raketenantrieb (100) nach Patentanspruch 1, 2 oder 3, **dadurch gekennzeichnet, dass** die Brennstoffzelle (182) einen ersten Aufnahmeraum (210) für den ersten Treibstoff (104) und einen zweiten Aufnahmeraum (212) für den zweiten Treibstoff (108) aufweist und der Brennstoffzelle (182) ein Aufnahmebehälter (214) für ein Reaktionsprodukt (216) aus dem ersten und dem zweiten Treibstoff (104, 108) zugeordnet ist.

5. Raketenantrieb (100) nach Patentanspruch 4, **dadurch gekennzeichnet, dass** dem Energiewandlungsaggregat (180) mindestens eine Hochdruckelektrolysezelle (230) zugeordnet ist, die bevorzugt mit der von der Brennstoffzelle (182) bereitgestellten elektrischen Energie betrieben ist, um das zugeführte Reaktionsprodukt (216) wieder in den ersten Treibstoff (104) und in den zweiten Treibstoff (108) in jeweils gasförmiger Phase aufzuspalten, wobei die gasförmigen Phasen der Treibstoffe (104, 108) unter einem hohen Druck stehen.

6. Raketenantrieb (100) nach Patentanspruch 4 oder 5, **dadurch gekennzeichnet, dass** der erste gasförmige Treibstoff (104) ausgehend von der Hochdruckelektrolysezelle (230) mittels einer ersten Zuleitung (240) in den ersten Gasdruckspeicher (152) einlagerbar ist und der zweite gasförmige Treibstoff (108) ausgehend von der Hochdruckelektrolysezelle (230) mittels einer zweiten Zuleitung (242) in den zweiten Gasdruckspeicher (156) einlagerbar ist.

7. Raketenantrieb (100) nach einem der Patentansprüche 1 bis 6, **dadurch gekennzeichnet, dass** mindestens zwei Manövriertriebwerke (250, 252) vorzugsweise mittels jeweils einer im Bereich einer Oberseite (262) des ersten kryogenen Tanks (102) angeordneten ersten Abdampfleitung (264) und/oder aus den Gasdruckspeichern (152, 156) versorgbar sind.

8. Raketenantrieb (100) nach einem der Patentansprüche 1 bis 7, **dadurch gekennzeichnet, dass** im Bereich der ersten und einer zweiten Abdampfleitung (264, 270) jeweils mindestens ein Sicherheitsventil (266, 274) angeordnet ist.

9. Raketenantrieb (100) nach einem der Patentansprüche 1 bis 8, **dadurch gekennzeichnet, dass** das Haupttriebwerk (120) eine Versorgungseinheit (136), eine Brennkammer (138) sowie eine Austrittsdüse (140) aufweist, wobei die Versorgungseinheit (136) mittels einer ersten Hauptleitung (122) mit einer Unterseite (142) des ersten kryogenen Tanks und mittels einer zweiten Hauptleitung (124) mit einer Unterseite (144) des zweiten kryogenen Tanks (108) verbunden ist.

10. Raketenantrieb (100) nach einem der Patentansprüche 1 bis 9, **dadurch gekennzeichnet, dass** der erste Treibstoff (104) bevorzugt Wasserstoff in flüssiger und/oder gasförmiger Phase und der zweite Treibstoff (108) bevorzugt Sauerstoff in flüssiger und/oder gasförmiger Phase ist.

11. Verfahren zum Betrieb eines Raketenantriebs (100) nach einem der Patentansprüche 1 bis 10, **dadurch gekennzeichnet, dass** in der Antriebsphase der erste und der zweite Gasdruckspeicher (152, 156) vorzugsweise mittels der jeweils zugeordneten Hauptzapfleitung (158, 160) des Raketenantriebs (120) geladen wird.

12. Verfahren nach Patentanspruch 11, **dadurch gekennzeichnet, dass** in der Ballistikphase der erste und der zweite Gasdruckspeicher (152, 156) vorzugsweise mittels des Energiewandlungsaggregats (180) geladen werden.

13. Verfahren nach Patentanspruch 11 oder 12, **dadurch gekennzeichnet, dass** in der Antriebsphase die Schuberzeugung vorrangig mittels des Haupttriebwerks (120) und in der Ballistikphase mit Hilfe des von den mindestens zwei Gasdruckspeichern (152, 156) versorgten mindestens einen Hilfstriebwerks (150, 154) erfolgt.

14. Raumfahrzeug (130), **dadurch gekennzeichnet, dass** dieses mit mindestens einem Raketenantrieb (100) nach einem der Patentansprüche 1 bis 10 ausgestattet ist.

## Claims

1. Rocket propulsion system (100) comprising a first cryogenic tank (102) and a second cryogenic tank (106), wherein the first cryogenic tank (102) is filled with a first propellant (104) and the second cryogenic tank (106) is filled with a second propellant (108) to supply at least one repeatedly ignitable main propulsion unit (120) in a propulsion phase of the rocket propulsion system (100), wherein in a ballistic phase a first auxiliary propulsion unit (150) is operable by means of a first gas pressure accumulator (152), and at least one further auxiliary propulsion unit (154) is operable by means of a further gas pressure accumulator (156) in order to pressurise the tank by means of at least a slight acceleration, and an energy conversion unit (180) is assigned to the rocket propulsion system (100), **characterized in that** the energy conversion unit (180) is designed to at least generate electrical energy and to charge the first and second gas pressure accumulators (152, 156), preferably in the ballistic phase.

2. Rocket propulsion system (100) according to Claim 1, **characterized in that** the first gas pressure accumulator (152) is chargeable in the propulsion phase by means of a first main tap line (158) of the main propulsion unit (120), and the se4cond gas pressure accumulator (156) is chargeable in the propulsion phase by means of a second main tap line (160) of the main propulsion unit (120).

3. Rocket propulsion system (100) according to Claim 1 or 2, **characterized in that** the energy conversion unit (180) includes at least one fuel cell (182) for generating electrical energy, and an open- or closed-loop control unit (190) is subordinated to the fuel cell (182) to enable comprehensive control of the rocket propulsion system (100).

4. Rocket propulsion system (100) according to Claim 1, 2 or 3, **characterized in that** the fuel cell (182) has a first accommodation space (210) for the first propellant (104) and a second accommodation space (212) for the second propellant (108), and a receptacle (214) for a reaction product (216) from the first and the second propellants (104, 108) is assigned to the fuel cell (182).

5. Rocket propulsion system (100) according to Claim 4, **characterized in that** at least one high-pressure electrolysis cell (230), which is preferably operated with the electrical energy provided by the fuel cell (182), is assigned to the energy conversion unit (180) in order to split the fed reaction product (216) into the first propellant (104) and the second propellant (108) again, each in the gaseous phase, the gaseous phases of the propellants (104, 108) being under high pressure.

6. Rocket propulsion system (100) according to Claim 4 or 5, **characterized in that** starting from the high-pressure electrolysis cell (230) the first gaseous propellant (104), can be delivered for storage in the first gas pressure accumulator (152) via a first feed line (240), and starting from the high-pressure electrolysis cell (230) the second gaseous propellant (108) can be delivered for storage in the second gas pressure accumulator (156) via a second feed line (242) .

7. Rocket propulsion system (100) according to any one of Claims 1 to 6, **characterized in that** at least two manoeuvring propulsion units (250, 252) can be supplied, preferably each by means of a first exhaust line (264) arranged in the region of a top side (262) of the first cryogenic tank (102), and/or from the gas pressure accumulators (152, 156).

8. Rocket propulsion system (100) according to any one of Claims 1 to 7, **characterized in that** at least one safety valve (266, 274) is arranged in each case in the region of the first and a second exhaust steam line (264, 270) .

9. Rocket propulsion system (100) according to any one of Claims 1 to 8, **characterized in that** the main propulsion unit (120) has a supply unit (136), a combustion chamber (138) and an outlet nozzle (140), wherein the supply unit (136) is connected to an underside (142) of the first cryogenic tank via a first main line (122) and to an underside (144) of the second cryogenic tank (108) via a second main line (124).

10. Rocket propulsion system (100) according to any one of Claims 1 to 9, **characterized in that** the first propellant (104) is preferably hydrogen in liquid and/or gaseous phase, and the second propellant (108) is preferably oxygen in liquid and/or gaseous phase.

11. Method for operating a rocket propulsion system (100) according to any one of Claims 1 to 10, **characterized in that** in the propulsion phase the first and the second gas pressure accumulators (152, 156) are preferably charged by means of the respectively assigned main tap line (158, 160) of the rocket propulsion unit (120).

12. Method according to Claim 11, **characterized in that** in the ballistic phase the first and the second gas pressure accumulators (152, 156) are charged preferably by means of the energy conversion unit (180).

13. Method according to Claim 11 or 12, **characterized in that** in the propulsion phase the thrust is generated primarily by means of the main propulsion unit (120) and in the ballistic phase with the aid of the at least one auxiliary propulsion units (150, 154), supplied by the at least two gas pressure accumulators (152, 156).

14. Spacecraft (130), **characterized in that** it is equipped with at least one rocket propulsion system (100) according to any one of Claims 1 to 10.

## Revendications

1. Propulsion de fusée (100) comprenant un premier réservoir cryogénique (102) et un second réservoir cryogénique (106), dans lequel le premier réservoir cryogénique (102) est rempli d'un premier carburant (104) et le second réservoir cryogénique (106) est rempli d'un second carburant (108) pour alimenter au moins un réacteur principal (120) pouvant être allumé de manière répétée dans une phase de propulsion de la propulsion de fusée (100), dans lequel pour faire pression sur le réservoir par une au moins légère accélération dans une phase de balistique, un premier réacteur auxiliaire (150) peut être entraîné au moyen d'un premier réservoir de gaz sous pression (152) et au moins un autre réacteur auxiliaire (154) peut être entraîné au moyen d'un autre réservoir de gaz sous pression (156), et un groupe de conversion d'énergie (180) est attribué à la propulsion de fusée (100), **caractérisée en ce que** le groupe de conversion d'énergie (180) est au moins conçu pour produire de l'énergie électrique et charger le premier et le second réservoir de gaz sous pression (152, 156) de préférence dans la phase de balistique.

2. Propulsion de fusée (100) selon la revendication 1, **caractérisée en ce que** le premier réservoir de gaz sous pression (152) peut être chargé au moyen d'une première ligne de soutirage (158) du réacteur principal (120) dans la phase de propulsion et le second réservoir de gaz sous pression (156) peut être chargé au moyen d'une seconde ligne de soutirage (160) du réacteur principal (120) dans la phase de propulsion.

3. Propulsion de fusée (100) selon la revendication 1 ou 2, **caractérisée en ce que** le groupe de conversion d'énergie (180) présente au moins une pile à combustible (182) pour produire de l'énergie électrique, et une unité de commande et/ou de régulation (190) pour un contrôle global de la propulsion de fusée (100) est disposée en aval de la pile à combustible (182).

4. Propulsion de fusée (100) selon la revendication 1, 2 ou 3, **caractérisée en ce que** la pile à combustible (182) présente un premier espace de réception (210) pour le premier carburant (104) et un second espace de réception (212) pour le second carburant (108), et un récipient de réception (214) pour un produit de réaction (216) du premier et du deuxième carburant (104, 108) est attribué à la pile à combustible (182).

5. Propulsion de fusée (100) selon la revendication 4, **caractérisée en ce qu'**au moins une cellule d'électrolyse haute pression (230) est attribuée au groupe de conversion d'énergie (180), laquelle est entraînée de préférence avec l'énergie électrique fournie par la pile à combustible (182) pour séparer le produit de réaction (216) amené à nouveau dans le premier carburant (104) et dans le second carburant (108) respectivement dans une phase gazeuse, dans lequel les phases gazeuses des carburants (104, 108) sont sous une haute pression.

6. Propulsion de fusée (100) selon la revendication 4 ou 5, **caractérisée en ce que** le premier carburant gazeux (104), partant de la cellule d'électrolyse haute pression (230), peut être stocké dans le premier réservoir de gaz sous pression (152) au moyen d'une première ligne d'alimentation (240), et le second carburant gazeux (108), partant de la cellule d'électrolyse haute pression (230), peut être stocké dans le second réservoir de gaz sous pression (156) au moyen d'une seconde ligne d'alimentation (242).

7. Propulsion de fusée (100) selon l'une des revendications de brevet 1 à 6, **caractérisée en ce qu'**au moins deux réacteurs de manœuvre (250, 252) peuvent être alimentés de préférence au moyen respectivement d'une première ligne de vapeur d'évacuation (264) disposée au niveau d'une face supérieure (262) du premier réservoir cryogénique (102) et/ou à partir des réservoirs de gaz sous pression (152, 156).

8. Propulsion de fusée (100) selon l'une des revendications de brevet 1 à 7, **caractérisée en ce que** respectivement au moins un clapet de sûreté (266, 274) est prévu au niveau de la première et d'une seconde ligne de vapeur d'évacuation (264, 270).

9. Propulsion de fusée (100) selon l'une des revendications de brevet 1 à 8, **caractérisée en ce que** le réacteur principal (120) présente une unité d'alimentation (136), une chambre de combustion (138) ainsi qu'une buse de sortie (140), dans lequel l'unité d'alimentation (136) est reliée à une face inférieure (142) du premier réservoir cryogénique par une première ligne principale (122) et reliée à une face inférieure (144) du second réservoir cryogénique (108) par une seconde ligne principale (124).

10. Propulsion de fusée (100) selon l'une des revendications de brevet 1 à 9, **caractérisée en ce que** le premier carburant (104) est de préférence de l'hydrogène sous phase liquide et/ou gazeuse et le second carburant (108) est de préférence de l'oxygène sous phase liquide et/ou gazeuse.

11. Procédé pour le fonctionnement d'une propulsion de fusée (100) selon l'une des revendications 1 à 10, **caractérisé en ce que** dans la phase de propulsion, le premier et le second réservoir de gaz sous pression (152, 156) est chargé de préférence au moyen de la ligne de soutirage (158, 160) respective attribuée de la propulsion de fusée (120).

12. Procédé selon la revendication 11, **caractérisé en ce que** dans la phase de balistique, les premier et second réservoirs de gaz sous pression (152, 156) sont chargés de préférence au moyen du groupe de conversion d'énergie (180) .

13. Procédé selon la revendication 11 ou 12, **caractérisé en ce que** dans la phase de propulsion, la production de poussée s'effectue en priorité au moyen du réacteur principal (120), et dans la phase de balistique, à l'aide de l'au moins un réacteur auxiliaire (150, 154) alimenté par les au moins deux réservoirs de gaz sous pression (152, 156).

14. Véhicule spatial (130), **caractérisé en ce que** celui-ci est doté d'au moins une propulsion de fusée (100) selon l'une des revendications 1 à 10.
